# EUROPEAN PATENT SPECIFICATION

(11) **EP 2 994 582 B1**
(45) Date of publication and mention of the grant of the patent: **29.11.2017**
(21) Application number: 13759815.7
(22) Date of filing: 21.06.2013
(51) Int. Cl.: E04C 2/52, F24D 3/14, E04C 2/42

(54) **PANEL FOR FLOOR HEATING**
PLATTE FÜR EINE FUSSBODENHEIZUNG
PANNEAU POUR CHAUFFAGE PAR LE SOL

(30) Priority: 20.12.2012 IT PD20120394
(43) Date of publication of application: 16.03.2016
(73) Proprietor: Rexpol SRL, 30036 S.Maria Di Sala (VE) (IT)
(72) Inventor: TONELLO, Romeo, I-30036 S. Maria Di Sala (VE) (IT)
(74) Representative: Vinci, Marcello
(86) International application number: PCT/IB2013/055100
(87) International publication number: WO 2014/096987

(56) References cited:
- EP-A1- 1 460 345
- DE-C1- 19 912 922
- DE-U1-202005 015 163
- GB-A- 2 444 241

## Description

The present patent concerns the sector of installations for buildings and in particular concerns a new floor heating and conditioning panel.

Radiant floor room heating systems were already known in ancient times but there has been an exponential development in the systems only in the last twenty years, thanks to the introduction of new technologies.

Said systems consist, very briefly, in passing heated water at controlled temperature through plastic or copper pipes buried in the screed of a floor which acts as a radiant plate.

The pipes must have a definite and precise diameter and laying distance for uniform distribution of the heat and an adequate development according to the design.

The pipes must be completely buried in the mass of material constituting the radiant body of the floor to obtain complete and uniform heat transmission by contact, with good thermal efficiency.

The pipe support must be thermally and preferably also sound insulated to prevent heat loss from the opposite side not involved in the heating, at the same time reducing the transmission of noise between adjacent rooms.

For this purpose the market offers a wide range of products with varying levels of performance.

The most widely used are preformed panels made of foamed polystyrene in various shapes and sizes which can be coated with sheets of plastic having the same rusticated shape as the panel bellow.

The advantage of these panels is that they have excellent insulating characteristics and sufficient walkability; laying of the pipes is facilitated by the fact that the solid rusticated elements are raised from the laying surface in order to guarantee laying of the pipes according to the distance determined by their arrangement and by the fact that the piping is secured simply by the pressure created by plastic deformation between two adjacent rusticated elements in insertion of the pipe.

A variation of the system consists in overlaying the preformed rusticated panel made of foamed polystyrene with a plastic thermoformed element having undercuts on the rusticated elements which prevent the pipe coming out once it has been inserted.

Although this system has good characteristics, it does not solve the problem of uniform heat distribution since all the rusticated elements, which are insulated, constitute points of discontinuity of the floor radiant mass with loss of thermal efficiency, furthermore structurally weakening the screed, particularly in the thinner layers.

To solve this problem, flat insulating panels are used coupled with aluminium lamina or plastic film screen-printed with drawings that illustrate the pipe laying distance.

The pipes are fastened with special staples which are applied during laying; the difficulty of this operation is obvious, especially when the pipe changes direction, with consequent increases in material and labour costs.
A prior art panel for holding pipes for floor heating is known from DE 20 2005 015 163 U1. The present invention is designed to solve all these problems.

### Description of the new panel

The support consists of a sound and/or heat insulating material, the thickness of which is determined according to its use, just as the type of insulation used can vary.

The format of the support may have any dimension, preferably modular sizes which are multiples of the laying distance.

The edges of the support can be plain or rebated.

One of the two surfaces of the support can be coupled with an aluminium lamina or a plastic film as a barrier to the water vapour with reflecting properties.

No type of screen-printing is necessary for laying of the pipes, with obvious economic saving since fastening of the pipes and their positioning is guaranteed by a new and particular type of plastic grid fixed to the insulating support.

The new grid solves all the problems of the previous systems.

Said grid comprises a base framework which rests on the laying surface; said framework comprises various rods for connecting and supporting a series of projections, or mushrooms, arranged in a modular fashion according to the distance of the heating pipes; it is preferable, but not essential, for said projections to have a circular shape, with said circular projections having external diameter equal to the pipe laying distance, by way of non-limiting example, 50, 100 or 150 mm.

The various projections are held together as they are integral with said rods of the grid, positioned in the lower part and having a thickness sufficient to keep the pipe raised from the insulating support, by way of non-limiting example, 2/5 mm, and a width sufficient to give the panel mechanical consistency, by way of non-limiting example, 5/8 mm.

The projections can be arranged according to a module in which they are aligned according to the orthogonal axes and preferably aligned according to the diagonals so as to reduce the interspace between the pipes.

The number, the dimensions and the position of the rods determine the distance between each projection for passage of the heating pipes, hence the height of the projection must be consistent with the diameter of the pipes, by way of non-limiting example, 12/18 mm or more or less.

To prevent the pipes moving or coming out of their position, undercut points are provided in the upper part of the projections so that, thanks to the plasticity of the materials used, pipes of various diameters can be held without damaging them. It is therefore possible to standardise the grid format, thus economising on the cost of the moulds and warehouse logistics. The height of the grid projections, which depends on the thickness of the heating pipes, must not be less than the diameter of the pipe in order to prevent contact of the feet of the installation personnel with the pipes; standardising the grid for all formats, from 15 to 20 mm of pipe, the total height could be 20/25 mm, for example.

The presence of the panel projections helps in changes of direction, such as inversion or 90 degrees movement in laying of the pipe.

Walkability is guaranteed over the whole surface of the panel without the danger of damaging the pipe during laying or during casting of the screed as it is protected by the structure of the grid above it throughout its development so that the operators' feet always rest on the edge of the projections and not on the pipes.

The present solution provides projections of circular shape with cylindrical walls. The concrete casting is more structural and uniform without points of discontinuity and the pipes are completely buried in the concrete, thus transmitting maximum radiant power.

The lower part of the grid is provided with feet or anchors, preferably with teeth and locking system, useful for coupling the support or panel below made of insulating material, while on the perimeter, appropriate seats or joints, and relative couplings, are arranged for the connection of adjacent panels in order to produce a continuous grid so that the concrete casting is continuous and uniform, without fragile sections, with the pipes completely buried in the concrete, thus transmitting maximum radiant power.

The connection rods between the various projections act as the point supporting surface of the heating pipes; said rods can be provided with appropriate shims to guarantee the exact distance between the heating pipe and the insulating panel below.

The presence of the new panel with grid coupled to other similar panels also performs the function of reinforcement of the concrete, totally or partially replacing or integrating the mesh. A version of the grid without anchors is possible if there is no need for a support made of insulating material for the lower insulation, for example in the spaces between two floors of the same housing unit, or in the case of refurbishing with low rooms.

The new panel, with or without lower insulating support, can also be used for cooling, circulating fluid in said pipes at a temperature lower than the ambient temperature.

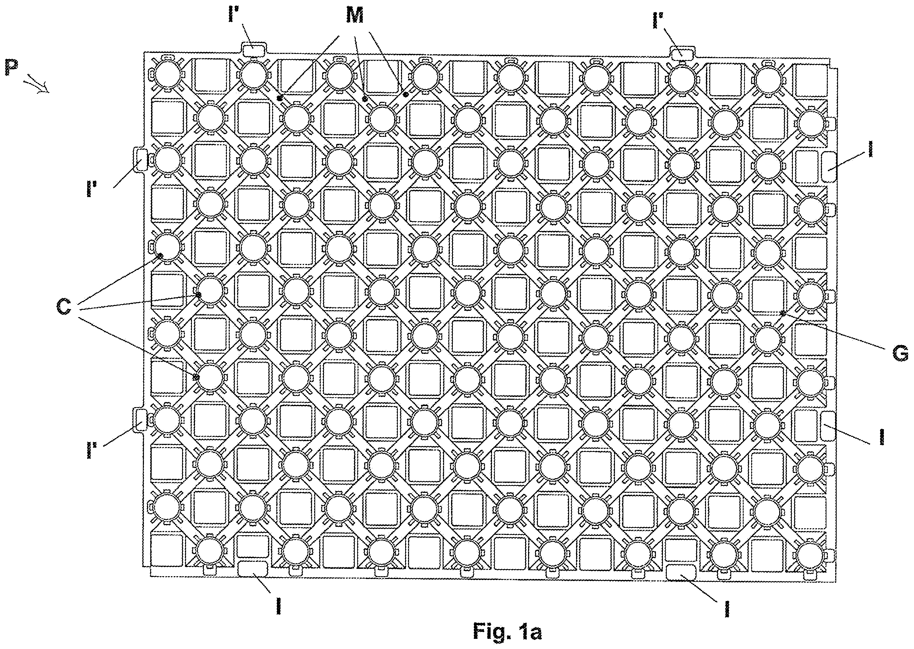

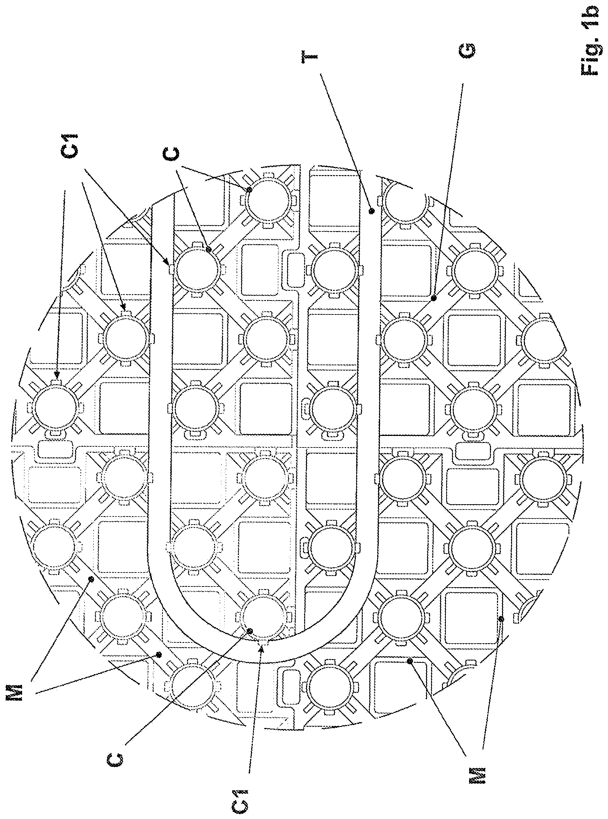

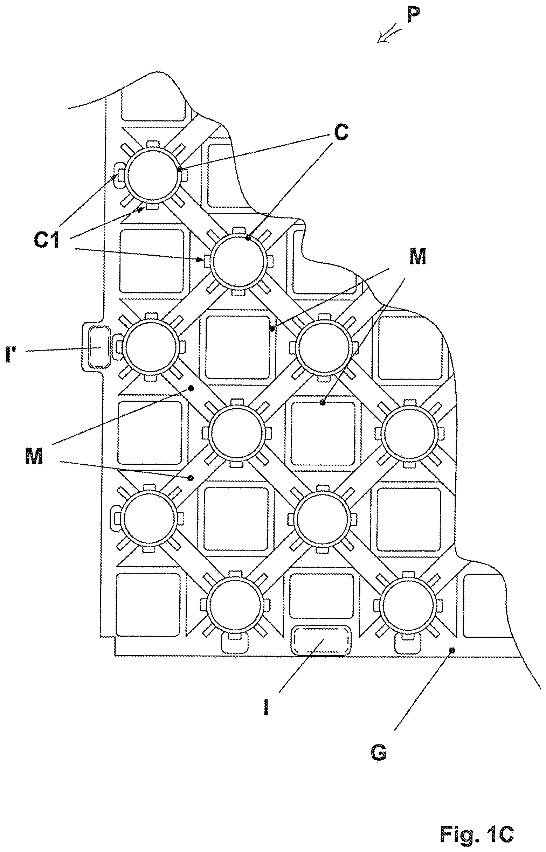

The characteristics of the new panel will be better clarified by the following description with reference to the drawings, attached by way of non-limiting example.
Figure la, and the relative details of figures 1b and 1c, show an overhead view of the new panel P comprising a grid G and a series of projections C, provided with four protrusions C1 to secure the floor heating pipe T. Said projections are connected to one another by means of the rods M which give the grid stability and rigidity.

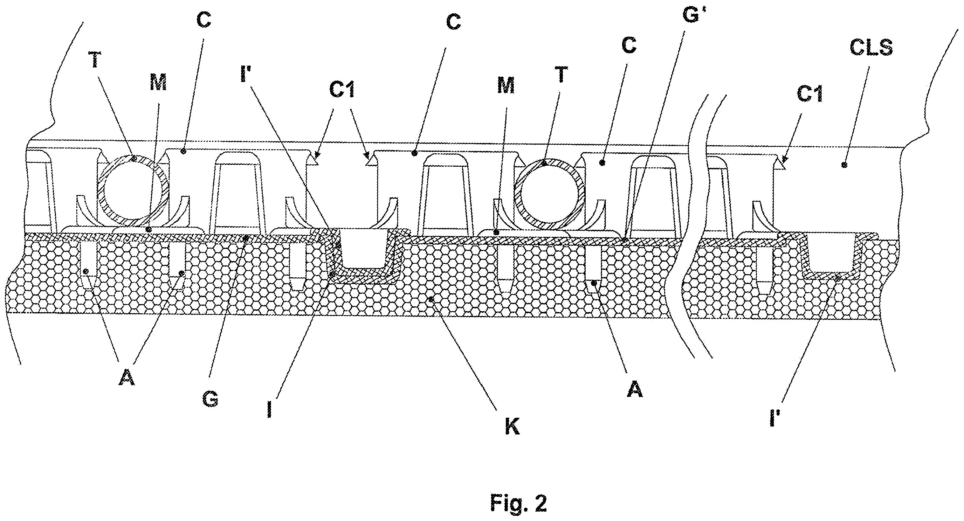

Figure 2 shows a section of the panel P, with grid G, with the heating pipes T between the projections C and held in position by the teeth or undercut C1. Below the pipes T are the rods or connection elements M and the polystyrene insulating panel K.

Below the rods M are the anchors A suitable for insertion in the insulating panel K.

Said grid G is incorporated, together with the pipes T, in the concrete forming the floor.

The grid G comprises in the perimeter appropriate joints I, I' which make the adjacent grids G integral with each other during laying.

Said joints I, I', in this case, comprise a protrusion I' suitable for insertion in a corresponding groove I present on the coupling edge of an identical grid G in order to provide said joints.

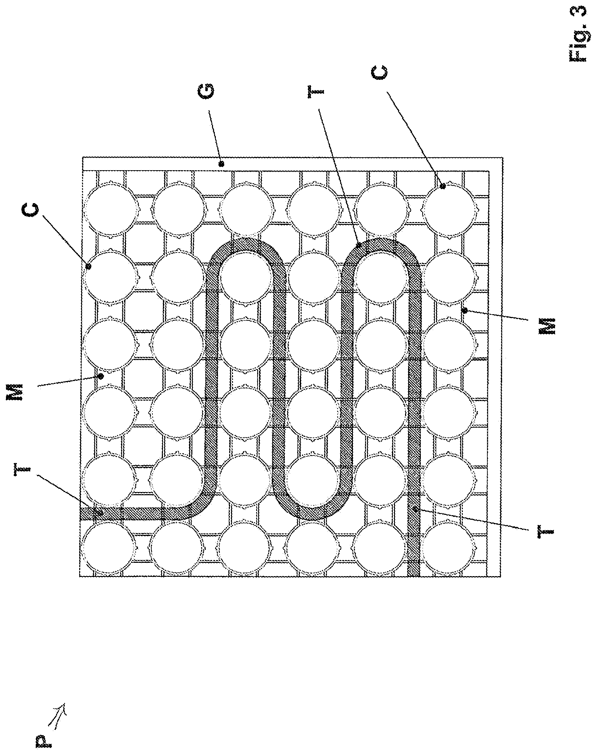

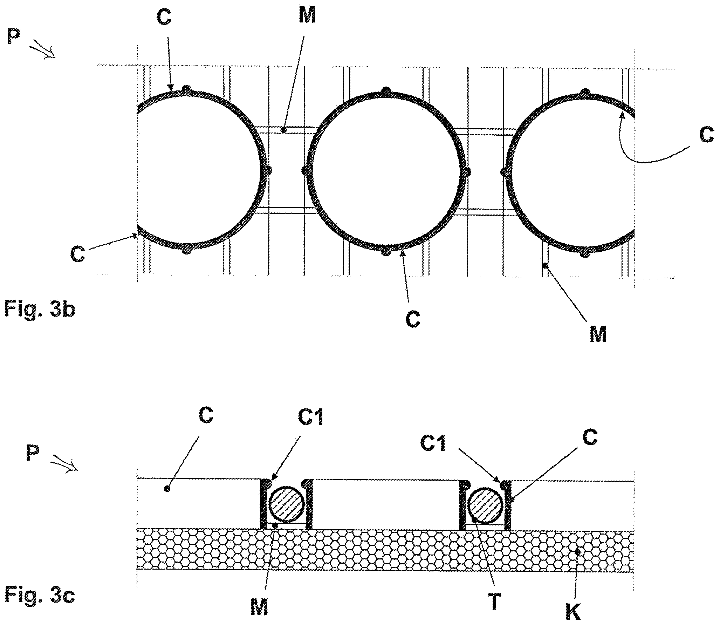

Figure 3 shows an overhead view of the entire panel P formed in this case of a grid G with 6x6 projections C and with the heating/cooling pipe T arranged and bent around said projections C.

Figures 3b and 3c show the projections C provided with upper protrusions C1 which hold the pipes T resting on the rods M.

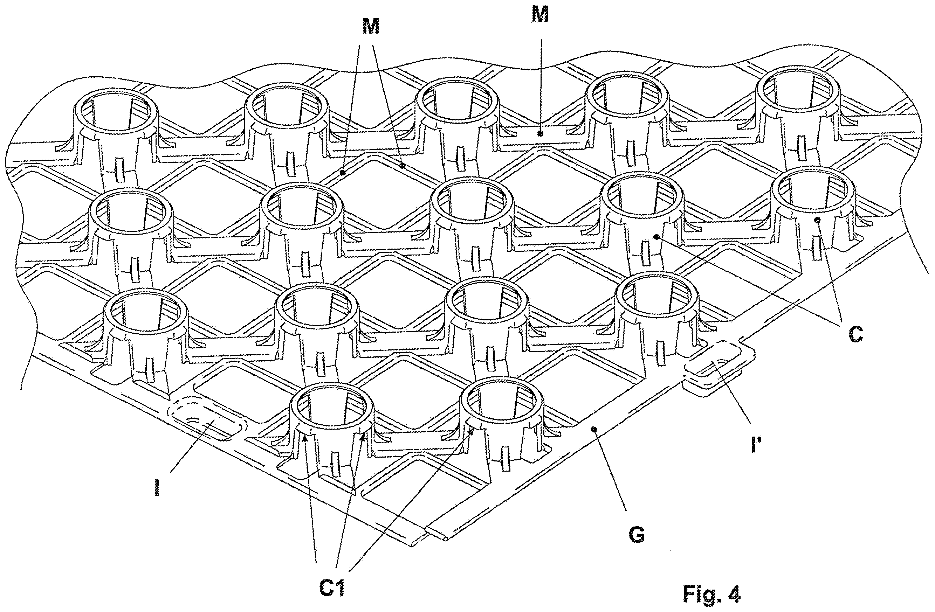

Figure 4 shows an axonometric view of a part of the new panel P with grid G and projections C.

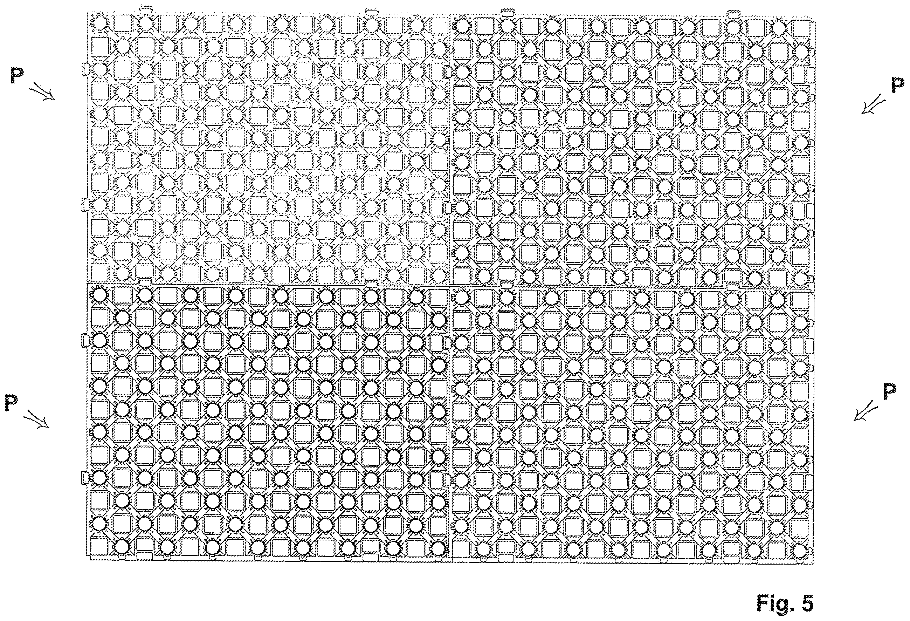

Figure 5 shows four panels P positioned side by side to provide a portion of framework structure suitable for holding the pipes T for the heating/cooling fluid and for being incorporated in the concrete casting, thus transmitting maximum radiant power.

Therefore with reference to the preceding description and the accompanying drawings, the following claims are made.

## Claims

1. Panel (P) suited to hold pipes (T) for floor heating and cooling, comprising a modular grid (G) made of moulded plastic comprising a base lattice and a series of projections (C) connected by rods (M) of said base lattice and spaced according to a modular pattern for the passage of said pipes (T) between said projections (C) according to predetermined laying distances of the pipes (T), wherein said pipes (T) can be turned around said projections (C), the height of said projections (C) being in whole or in part greater than the diameter of the pipe (T) so as to protect the pipes (T) during installation, or during the casting of the screed, **characterized in that** each of said projections (C) is hollow and comprises a cylindrical wall, equipped with one or more protrusions (C1) suited to lock said pipes (T), and wherein the shape of said projections (C) is continuous and linear, and parallelepiped or wholly or partly circular, and wherein said cylindrical wall is provided with through openings in communication with the interior of the projections (C).

2. Panel, according to claim 1, **characterized in that** said protrusions (C1) are located in proximity of said superior edge of said cylindrical wall.

3. Panel according to one or more of the preceding claims, **characterized in that** below said grid (G), there is a support or heat and/or sound insulating panel (K).

4. Panel according to one or more preceding claims, **characterized in that** the lower part of the grid (G) is equipped with feet.

5. Panel according to one or more preceding claims, **characterized in that** the lower part of the grid (G) is equipped with anchors with teeth and locking system, useful for coupling the support or panel below made of insulating material, while on the perimeter, appropriate seats or joints, and relative couplings, are arranged for the connection of adjacent panels in order to produce a continuous grid.

6. Panel according to all of the preceding claims, **characterized in that** in the perimeter of the grid (G), there are suitable housings or joints (I) and corresponding couplings (I) suited to be coupled with the adjacent panels in order to achieve a continuous grid in such a way that the concrete screed is continuous and homogeneous, without fragile sections, and wherein the pipes are completely buried in the concrete.

## Patentansprüche

1. Paneel (P), dazu geeignet, Rohre für eine Fußbodenheizung und -kühlung zu halten, ein modulares Gitter (G) aus geformtem Kunststoff umfassend, das ein Grundraster und eine Reihe von Vorsprüngen (C) aufweist, die durch Stäbe (M) des besagten Grundrasters verbunden sind und für den Durchgang der besagten Rohre (T) zwischen den besagten Vorsprüngen (C) einem modularen Muster und vorbestimmten Verlegeabständen der Rohre (T) gemäß voneinander distanziert sind, wobei die besagten Rohre (T) um die besagten Vorsprünge (C) drehbar sind, die Höhe der besagten Vorsprünge (C) insgesamt oder teilweise größer ist als der Durchmesser des Rohrs (T), so dass die Rohre (T) während der Installierung bzw. während des Vergießens des Estrichs geschützt werden, **dadurch gekennzeichnet, dass** jeder der besagten Vorsprünge (C) hohl ist und eine zylindrische Wand umfasst, die mit einer oder mehreren Auskragungen (C1) versehen ist, welche geeignet ist/sind, die besagten Rohre (T) zu blockieren, und wobei die Form der besagten Vorsprünge (C) kontinuierlich und linear ist, sowie parallelflach oder ganz oder teilweise kreisförmig, und wobei die besagte zylindrische Wand mit Durchgangsöffnungen versehen ist, welche mit dem Inneren der Vorsprünge (C) kommunizieren.

2. Paneel nach Patentanspruch 1, **dadurch gekennzeichnet, dass** die besagten Auskragungen (C1) in der Nähe der besagten oberen Kante der besagten zylindrischen Wand positioniert sind.

3. Paneel nach einem oder mehreren der vorhergehenden Patentansprüche, **dadurch gekennzeichnet, dass** sich unter dem besagten Gitter (G) eine Halterung oder ein Wärme- und/oder Schalldämmungspaneel (K) befindet.

4. Paneel nach einem oder mehreren der vorhergehenden Patentansprüche, **dadurch gekennzeichnet, dass** der untere Teil des Gitters (G) mit Füßen versehen ist.

5. Paneel nach einem oder mehreren der vorstehenden Patentansprüche, **dadurch gekennzeichnet, dass** der untere Teil des Gitters (G) mit Verankerungen mit Zähnen und Blockiersystem versehen ist, welche dazu dienen, die Halterung oder das darunter befindliche Paneel aus Dämmstoff zu befestigen, während am Umfang geeignete Sitze oder Verbindungen und entsprechende Verbindungsteile angeordnet sind, um die angrenzenden Paneele zu verbinden, so dass ein kontinuierliches Gitter entsteht.

6. Paneel nach allen vorstehenden Patentansprüchen, **dadurch gekennzeichnet, dass** sich am Umfang des Gitters (G) geeignete Aufnahmen oder Verbindungen (I) und entsprechende Verbindungsteile (I) befinden, die dazu geeignet sind, mit den angrenzenden Paneelen verbunden zu werden, um ein kontinuierliches Gitter zu erzielen, so dass der Betonestrich kontinuierlich und gleichmäßig ist, ohne brüchige Abschnitte, und wobei die Rohre vollständig im Beton versenkt sind.

## Revendications

1. Panneau (P) indiqué pour retenir des tuyaux pour le chauffage et le refroidissement au sol **caractérisé en ce qu'**il comprend une grille modulaire (G) réalisée en plastique moulé, comprenant un treillis de base et une série de saillies (C) reliées par des tiges (M) dudit treillis de base et espacées selon un schéma modulaire pour le passage desdits tuyaux (T) entre lesdites saillies (C) selon des distances de pose prédéterminées des tuyaux (T), où lesdits tuyaux (T) peuvent être tournés autour desdites saillies (C), la hauteur desdites saillies (C) étant entièrement ou partiellement plus grande que le diamètre du tuyau (T) de façon à protéger les tuyaux (T) durant l'installation, ou durant la coulée de la chape, **caractérisé en ce que** chacune desdites saillies (C) est creuse et comprend une paroi cylindrique dotée d'une ou plusieurs protrusions (C1) indiquées pour bloquer lesdits tuyaux (T), et où la forme desdites saillies (C) est continue et linéaire, et en parallélépipède ou entièrement ou partiellement circulaire, et où ladite paroi cylindrique est dotée de trous passants en communication avec l'intérieur des saillies (C).

2. Panneau selon la revendication 1, **caractérisé en ce que** lesdites saillies (C) sont positionnés à proximité dudit bord supérieur de ladite paroi cylindrique.

3. Panneau selon l'une ou plusieurs des revendications précédentes, **caractérisé en ce qu'**en dessous de ladite grille (G) se trouve un support ou un panneau d'isolation thermique et/ou phonique (K).

4. Panneau selon l'une ou plusieurs des revendications précédentes, **caractérisé en ce que** la partie inférieure de la grille (G) est dotée de pieds.

5. Panneau selon l'une ou plusieurs des revendications précédentes, **caractérisé en ce que** la partie inférieure de la grille (G) est dotée d'ancrages avec dents et d'un système de blocage, utiles pour coupler le support ou le panneau au-dessous réalisé en matériau d'isolation, alors que sur le périmètre, des sièges ou des joints adaptés et des raccordements correspondants sont disposés pour la connexion de panneaux adjacents de façon à produire une grille continue.

6. Panneau selon l'une ou plusieurs des revendications précédentes, **caractérisé en ce que** sur le périmètre de la grille (G), se trouvent des sièges ou des joints ad hoc (I) et des raccordements correspondants (I) indiqués pour être reliés à des panneaux adjacents de façon à atteindre une grille continue de manière à ce que la chape en béton est continue et homogène, dépourvue de sections fragiles et où les tuyaux sont complètement noyés dans le béton.
